# EUROPEAN PATENT APPLICATION

(11) **EP 4 300 615 A1**
(43) Date of publication of application: **03.01.2024**
(21) Application number: 21929612.6
(22) Date of filing: 12.03.2021
(51) Int. Cl.: H01M 4/13, H01M 10/052

(54) **ELECTROCHEMICAL DEVICE AND ELECTRONIC APPARATUS**

(71) Applicant: Ningde Amperex Technology Limited, Zhangwan Town, Jiaocheng District Ningde City Fujian 352100 (CN)
(72) Inventor: LI, Yajie, Ningde City, Fujian 352100 (CN)
(74) Representative: Icosa
(86) International application number: PCT/CN2021/080416
(87) International publication number: WO 2022/188136

(57) **Abstract**

An electrochemical device includes a positive electrode, the positive electrode includes a positive electrode active material layer, the positive electrode active material layer includes a positive electrode active material and a composite carbon material. A is a volume of the positive electrode active material layer , B is a volume of pores having a pore diameter of less than 2 µm in the positive electrode active material layer , and 14% ≤ B/A ≤ 20%. The positive electrode active material layer includes the positive electrode active material and the composite carbon material, and 14% ≤ B/A ≤ 20%, and indicates that the formed positive electrode has abundant pores for lithium ion transport.

## Description

### TECHNICAL FIELD

This application relates to the field of electrochemical energy storage, and in particular, to an electrochemical device and an electronic device.

### BACKGROUND

With development and progress of electrochemical devices (e.g. lithium-ion batteries), higher and higher requirements are put forward for their rate performance and energy densities. Although current technologies for improving the electrochemical devices can enhance the rate performance and energy densities of the electrochemical devices to a certain extent, they are still unsatisfactory, and further improvements are expected.

### SUMMARY

Some embodiments of this application provide an electrochemical device, including a positive electrode. The positive electrode includes a positive electrode active material layer, and the positive electrode active material layer includes a positive electrode active material and a composite carbon material. A volume of the positive electrode active material layer is a first volume A, and a volume of pores having a pore diameter of less than 2 µm in the positive electrode active material layer is a second volume B, wherein 14% ≤ B/A ≤ 20%.

In some embodiments, a volume of pores having a pore diameter of less than or equal to 200 nm in the positive electrode active material layer is a third volume C, wherein 24% ≤ C/B ≤ 36%. In some embodiments, the composite carbon material includes carbon nanotubes and two-dimensional inorganic materials. In some embodiments, the carbon nanotubes have a tube length of greater than or equal to 2 µm. In some embodiments, the two-dimensional inorganic materials include at least one of graphene, V₂O₅, Nb₂O₅, TiO₂, Co₃V₂O₈, MoS₂ or SnO₂. In some embodiments, a mass ratio of the carbon nanotubes to the two-dimensional inorganic materials is greater than or equal to 1 and less than or equal to 20. In some embodiments, the two-dimensional inorganic materials have Dv50 of less than 8 µm.

In some embodiments, the positive electrode active material in the positive electrode active material layer has a mass content of greater than or equal to 97%. In some embodiments, the positive electrode active material layer has a compacted density of less than or equal to 4.2 g/cm³. In some embodiments, the positive electrode active material layer has resistance of less than 0.2 Q. In some embodiments, the electrochemical device adopts a discharge rate of 4 C for measuring, and a capacity retention rate ≥ 80%.

In some embodiments, the electrochemical device further includes a negative electrode, and the negative electrode includes a negative electrode active material layer. In some embodiments, a negative electrode active material in the negative electrode active material layer has a mass content of greater than or equal to 97.4%. In some embodiments, the negative electrode active material layer has a compacted density of less than or equal to 1.7 g/cm³. In some embodiments, the negative electrode active material includes at least one of graphite, hard carbon, silicon, silicon monoxide or organic silicon.

An embodiment of this application further provides an electronic device, including the foregoing electrochemical device.

According to the embodiments of this application, the positive electrode active material layer includes the positive electrode active material and the composite carbon material, so that the composite carbon material can play a role of structural bonding and pore formation. On the one hand, because an existing polymer binder is substituted with the composite carbon material, a lithium-ion manufacturing process is more environmentally friendly, and an energy intensity of a lithium-ion battery is advantageously increased; and on the other hand, by adopting the composite carbon material, a ratio of the volume B of the pores having a pore diameter of less than 2 µm in the positive electrode active material layer to the volume A of the positive electrode active material layer is: 14% ≤ B/A ≤ 20%, thus indicating that the formed positive electrode has abundant pores for lithium ion transport, which is conducive to improving rate performance of the lithium-ion battery.

### DESCRIPTION OF EMBODIMENTS

The following embodiments enable a person skilled in the art to more fully understand this application, but do not limit this application in any way.

Some embodiments of this application provide an electrochemical device. The electrochemical device includes a positive electrode, and the positive electrode includes a positive electrode active material layer. In some embodiments, the positive electrode active material layer includes a positive electrode active material and a composite carbon material. In some embodiments, a volume of the positive electrode active material layer is a first volume A, and a volume of pores having a pore diameter of less than 2 µm in the positive electrode active material layer is a second volume B, where 14% ≤ B/A ≤ 20%. The foregoing pore volume may be measured through a pore volume measuring method discussed below, but it is merely exemplary, and other suitable methods may further be used for measuring. In some embodiments, a porosity of the positive electrode active material layer may be adjusted through cold calendering pressure, but it is merely exemplary and not intended to limit this application.

The composite carbon material in the positive electrode active material layer can play a role of structural bonding and pore formation.14% ≤ B/A indicates that the formed positive electrode has abundant pores for lithium ion transport, thereby improving rate performance of the electrochemical device formed by the positive electrode. If B/A is too small, such as less than 14%, the positive electrode active material layer is not conducive to lithium ion transport, thus reducing the rate performance of the electrochemical device. However, if B/A is too large, such as 20% < B/A, an energy density of the electrochemical device is disadvantageously affected.

In some embodiments, a volume of pores having a pore diameter of less than or equal to 200 nm in the positive electrode active material layer is a third volume C, where 24% ≤ C/B ≤ 36%. The more pores having the pore diameter of ≤ 200 nm indicate the more abundant pores for lithium ion transport, which is more conducive to rapid de-intercalation of lithium ions from a surface of the active material, which is especially important for a fast charge capability. The positive electrode with 24% ≤ C/B has more excellent rate performance, and the electrochemical device can achieve a capacity retention rate of 80% or above at a discharge rate of 4 C. If C/B is too small, rapid de-intercalation of the lithium ions from the surface of the active material cannot be fully achieved. In addition, if C/B is too large, such as 36% < C/B, it indicates that there are too many small particles inside, the small particles are prone to agglomeration, and poor dispersion may disadvantageously affect resistance of the active material layer, thus affecting the rate performance of the electrochemical device.

In some embodiments, the composite carbon material includes carbon nanotubes (CNTs) and two-dimensional inorganic materials. The CNTs are in lap joint with each other on the surface of the positive electrode active material, which plays a role of structural bonding. The two-dimensional inorganic materials may exist at lapping positions of the positive electrode active material and the CNTs to form strong bonding and good conductive sites, and also play a role of pore formation (e.g. pores having a pore diameter of ≤ 200 nm). In some embodiments, the carbon nanotubes may be single-walled, multi-walled or few-walled carbon nanotubes. The two-dimensional inorganic materials of this application refer to inorganic materials in which electrons can move freely on a nanoscale (1 nm to 100 nm) in only two dimensions (planar motion).

In some embodiments, the carbon nanotubes have a tube length of greater than or equal to 2 µm. The carbon nanotubes having a relatively large tube length can play a better role of structural bonding. In some embodiments, the two-dimensional inorganic materials include at least one of graphene, V₂O₅, Nb₂O₅, TiO₂, Co₃V₂O₈, MoS₂ or SnO₂. In some embodiments, a mass ratio of the carbon nanotubes to the two-dimensional inorganic materials is greater than or equal to 1 and less than or equal to 20. If the mass ratio of the carbon nanotubes to the two-dimensional inorganic materials is too small, the content of the carbon nanotubes is relatively less, and the role of structural bonding of the carbon nanotubes will be affected to a certain extent; while if the mass ratio of the carbon nanotubes to the two-dimensional inorganic materials is too large, effects of enhancing bonding, increasing conductive sites and forming pores of the two-dimensional inorganic materials may be disadvantageously affected. In some embodiments, the two-dimensional inorganic materials have Dv50 of less than 8 µm. If the Dv50 of the two-dimensional inorganic materials is too large, conductive performance of the positive electrode active material layer will be disadvantageously affected.

In some embodiments, the positive electrode active material include at least one of lithium cobaltate, lithium iron phosphate, lithium manganese ferric phosphate, sodium iron phosphate, lithium vanadium phosphate, sodium vanadium phosphate, lithium vanadyl phosphate, sodium vanadyl phosphate, lithium vanadate, lithium manganate, lithium nickelate, lithium nickel cobalt manganate, a lithium-rich manganese-based material or lithium nickel cobalt aluminate. In some embodiments, the positive electrode active material layer may further include a conductive agent. In some embodiments, the conductive agent in the positive electrode active material layer may include at least one of conductive carbon black, Ketjen black, lamellar graphite, graphene, carbon nano tubes or carbon fibers. In some embodiments, the mass content of the positive electrode active material in the positive electrode active material layer is greater than or equal to 97%. By adopting the relatively high mass content of the positive electrode active material, the energy density of the corresponding electrochemical device can be increased. In some embodiments, the positive electrode active material layer has a compacted density of less than or equal to 4.2 g/cm³. If the compacted density of the positive electrode active material layer is too large, internal resistance of lithium ion transport may be increased, which is not conducive to rapid transport of the lithium ions. In some embodiments, the positive electrode active material layer has resistance of less than 0.2 Q. Thus, dynamic performance of the corresponding electrochemical device is advantageously improved.

In some embodiments, the composite carbon material acts as a binder in the positive electrode active material layer. In some embodiments, a mass ratio of the positive electrode active material to the conductive agent to the composite carbon material in the positive electrode active material layer may be (95 to 99.5): (0 to 1): (0.5 to 5). In some embodiments, the positive electrode active material layer may have a thickness ranging from 10 µm to 500 µm. It is to be understood that the foregoing is merely exemplary, and the positive electrode active material layer of the positive electrode may adopt any other suitable materials, thicknesses and mass ratios.

In some embodiments, the positive electrode may further include a positive electrode current collector, and the positive electrode active material layer is disposed on the positive electrode current collector. In some embodiments, the positive electrode active material layer is disposed on one side or two sides of the positive electrode current collector. In some embodiments, Al foil may be adopted as the positive electrode current collector, and certainly, other positive electrode current collectors frequently used in the art may also be adopted. In some embodiments, the positive electrode current collector may have a thickness ranging from 1 µm to 200 µm. In some embodiments, the positive electrode active material layer may only be coated on a partial region of the positive electrode current collector.

In some embodiments, the electrochemical device may further include a negative electrode. In some embodiments, the electrochemical device may include an electrode assembly, and the electrode assembly includes a positive electrode, a negative electrode, and a separator disposed between the positive electrode and the negative electrode.

In some embodiments, the negative electrode includes a negative electrode active material layer. In some embodiments, the negative electrode active material layer includes a negative electrode active material, and the negative electrode active material may include at least one of graphite, hard carbon, silicon, silicon monoxide or organic silicon. In some embodiments, the negative electrode active material in the negative electrode active material layer has a mass content of greater than or equal to 97.4%. By adopting the relatively high mass content of the negative electrode active material, an energy density of an electrochemical device formed by the negative electrode can be increased. In some embodiments, in a case that stored electricity is fully discharged, the negative electrode active material layer has a compacted density of less than or equal to1.7 g/cm³. If the compacted density of the negative electrode active material layer is too large, the internal resistance of lithium ion transport may be increased, which is not conducive to rapid transport of the lithium ions, and lithium plating is prone occurring in a charging process of the electrochemical device.

In some embodiments, the negative electrode active material layer may further include a conductive agent and a binder. In some embodiments, the conductive agent in the negative electrode active material layer may include at least one of conductive carbon black, Ketjen black, lamellar graphite, graphene, carbon nano tubes or carbon fibers. In some embodiments, the binder in the negative electrode active material layer may include at least one of carboxymethyl cellulose (CMC), polyacrylic acid, polyvinyl pyrrolidone, polyaniline, polyimide, polyamide-imide, polysiloxane, styrene-butadiene rubber, epoxy resin, polyester resin, polyurethane resin or polyfluorene. In some embodiments, a mass ratio of the negative electrode active material to the conductive agent to the binder in the negative electrode active material layer may be (90 to 98): (0.1 to 10): (0.1 to 10). It is to be understood that the foregoing is merely exemplary, and any other suitable materials and mass ratios may be adopted.

In some embodiments, the negative electrode may further include a negative electrode current collector, and the negative electrode active material layer is disposed on one side or two sides of the negative electrode current collector. In some embodiments, at least one of copper foil, nickel foil or a carbon-based current collector may be adopted as the negative electrode current collector.

In some embodiments, the separator includes at least one of polyethylene, polypropylene, polyvinylidene fluoride, polyethylene terephthalate, polyimide or aramid fibers. For example, the polyethylene includes and is selected from at least one of high density polyethylene, low density polyethylene or ultra-high molecular weight polyethylene. Polyethylene and polypropylene, in particular, have a good effect on preventing short circuits and can improve stability of a battery through a turn-off effect. In some embodiments, a thickness of the separator falls within a range of about 5 µm to 50 µm.

In some embodiments, a surface of the separator may further include a porous layer, and the porous layer is disposed on at least one surface of a substrate of the separator. The porous layer includes an inorganic particle and a binder. The inorganic particle is selected from at least one of aluminum oxide (Al₂O₃), silicon oxide (SiO₂), magnesium oxide (MgO), titanium oxide (TiO₂), hafnium dioxide (HfO₂), tin oxide (SnO₂), cerium dioxide (CeO₂), nickel oxide (NiO), zinc oxide (ZnO), calcium oxide (CaO), zirconium oxide (ZrO₂), yttrium oxide (Y₂O₃), silicon carbide (SiC), boehmite, aluminum hydroxide, magnesium hydroxide, calcium hydroxide or barium sulfate. In some embodiments, pores of the separator have a diameter ranging from about 0.01 µm to 1 µm. The binder of the porous layer is selected from at least one of polyvinylidene fluoride, a vinylidene fluoride-hexafluoropropylene copolymer, polyamide, polyacrylonitrile, polyacrylate, polyacrylic acid, polyacrylate, sodium carboxymethylcellulose, polyvinylpyrrolidone, polyvinyl ether, polymethyl methacrylate, polytetrafluoroethylene or polyhexafluoropropylene. The porous layer on the surface of the separator can improve heat resistance, oxidation resistance and electrolyte wettability of the separator and enhance bonding performance between the separator and an electrode plate.

In some embodiments of this application, the electrode assembly of the electrochemical device is a wound-type electrode assembly, a stacked-type electrode assembly or a folded-type electrode assembly. In some embodiments, the positive electrode and/or the negative electrode of the electrochemical device may be a multi-layer structure formed by winding or stacking, and may also be a single-layer structure formed by superposing the single-layer positive electrode, the separator and the single-layer negative electrode.

In some embodiments, the electrochemical device includes a lithium-ion battery, but this application is not limited thereto. In some embodiments, the electrochemical device may further include an electrolyte. The electrolyte may be one or more of a gel electrolyte, a solid electrolyte and an electrolytic solution, and the electrolytic solution includes a lithium salt and a non-aqueous solvent. The lithium salt is selected from one or more of LiPF₆, LiBF₄, LiAsF₆, LiClO₄, LiB(C₆H₅)₄, LiCH₃SO₃, LiCF₃SO₃, LiN(SO₂CF₃)₂, LiC(SO₂CF₃)₃, LiSiF₆, LiBOB or lithium difluoroborate. For example, LiPF₆ is selected as the lithium salt, because it has high ionic conductivity and can improve cycle performance.

The non-aqueous solvent may be a carbonate compound, a carboxylate compound, an ether compound, other organic solvents, or a combination thereof.

The carbonate compound may be a chain carbonate compound, a cyclic carbonate compound, a fluorocarbonate compound, or a combination thereof.

Examples of the chain carbonate compound are diethyl carbonate (DEC), dimethyl carbonate (DMC), dipropyl carbonate (DPC), methyl propyl carbonate (MPC), ethyl propyl carbonate (EPC), methyl ethyl carbonate (MEC), and a combination thereof. Examples of the cyclic carbonate compound are ethylene carbonate (EC), propylene carbonate (PC), butene carbonate (BC), vinyl ethylene carbonate (VEC), or a combination thereof. Examples of the fluorocarbonate compound are fluoroethylene carbonate (FEC), 1,2-difluoroethylene carbonate, 1,1-difluoroethylene carbonate, 1,1,2-trifluoroethylene carbonate, 1,1,2,2-tetrafluoroethylene carbonate, 1-fluoro-2-methyl-butene carbonate, 1-fluoro-1-methyl-butene carbonate, 1,2-difluoro-1-methyl-butene carbonate, 1,1,2-trifluoro-2-methyl-butene carbonate, trifluoromethyl-butene carbonate, or a combination thereof.

Examples of the carboxylate compound are methyl acetate, ethyl acetate, n-propyl acetate, tert-butyl acetate, methyl propionate, ethyl propionate, propyl propionate, γ-butyrolactone, decalactone, valerolacton, mevalonic acid lactone, caprolactone, methyl formate, or a combination thereof.

Examples of the ether compound are dibutyl ether, tetraethylene glycol dimethyl ether, diethylene glycol dimethyl ether, 1,2-dimethoxyethane, 1,2-diethoxyethane, ethoxy-methoxyethane, 2-methyltetrahydrofuran, tetrahydrofuran, or a combination thereof.

Examples of the other organic solvents are dimethylsulfoxide, 1,2-dioxolane, sulfolane, methylsulfolane, 1,3-dimethyl-2-imidazolidone, N-methyl-2-pyrrolidone, formamide, dimethylformamide, acetonitrile, trimethyl phosphate, triethyl phosphate, trioctyl phosphate, phosphate, or a combination thereof.

In some embodiments of this application, taking a lithium-ion battery as an example, a positive electrode, a separator and a negative electrode are sequentially wound or stacked into an electrode assembly, then the electrode assembly is put into, for example, an aluminum foil film for packaging, an electrolytic solution is injected, chemical formation and packaging are performed, and then the lithium-ion battery is prepared. Then a performance test is performed on the prepared lithium-ion battery.

A person skilled in the art will understand that the preparation method of the electrochemical device (e.g. lithium-ion battery) described above are merely an embodiment. Other methods frequently used in the art may be adopted without departing from the disclosure of this application.

An embodiment of this application further provides an electronic device including the foregoing electrochemical device. The electronic device according to the embodiment of this application is not particularly limited, and may be any known electronic device used in the prior art. In some embodiments, the electronic device may include, but is not limited to, a notebook computer, a pen-inputting computer, a mobile computer, an e-book player, a portable phone, a portable fax machine, a portable photocopier, a portable printer, a stereo headset, a video recorder, a liquid crystal display television, a handheld cleaner, a portable CD player, a mini disk, a transceiver, an electronic notepad, a calculator, a memory card, a portable voice recorder, a radio, a backup power supply, a motor, an automobile, a motorcycle, a power-assisted bicycle, a bicycle, a lighting appliance, a toy, a game console, a watch, an electric tool, a flashlight, a camera, a large household battery, a lithium-ion capacitor, and the like.

Some specific embodiments and comparative embodiments are listed below to better illustrate this application. The lithium-ion battery is taken as an example.

### Embodiment 1

Preparing a positive electrode: dissolving lithium cobaltate as a positive electrode active material, conductive carbon black, carbon nanotubes, and titanium dioxide (TiO₂) as a two-dimensional inorganic material in a N-methylpyrrolidone (NMP) solution according to a weight ratio of 98.2: 0.5: 1.182: 0.118 to form a positive electrode slurry. Adopting aluminum foil as a positive electrode current collector, coating the positive electrode current collector with the positive electrode slurry to obtain a positive electrode active material layer, and performing drying, cold calendering, and cutting to obtain the positive electrode.

Preparing a negative electrode: dissolving graphite, sodium carboxymethylcellulose (CMC), and styrene-butadiene rubber as a binder in deionized water according to a weight ratio of 97.8: 1.3: 0.9 to form a negative electrode slurry. Adopting 10-µm thick copper foil as a negative electrode current collector, coating the negative electrode current collector with the negative electrode slurry, and performing drying and cutting to obtain the negative electrode.

Preparing a separator: adopting 8-µm thick polyethylene (PE) as a substrate of the separator, coating each of two sides of the substrate of the separator with a 2-µm aluminum oxide ceramic layer, finally coating each of the two sides coated with the ceramic layers with polyvinylidene fluoride (PVDF) of 2.5 mg/cm² as a binder, and performing drying.

Preparing an electrolytic solution: adding LiPF₆ into non-aqueous organic solvents (ethylene carbonate (EC): diethyl carbonate (DEC): propylene carbonate (PC): acrylate: vinylene carbonate (VC) = 20: 30: 20: 28: 2, weight ratio) in an environment in which the moisture content is less than 10 ppm, where LiPF₆ has a concentration of 1.15 mol/L, and mixing the mixture well to obtain the electrolytic solution.

Preparing a lithium-ion battery: stacking the positive electrode, the separator, and the negative electrode in sequence, locating the separator between the positive electrode and the negative electrode to play a role of separation, and winding the stacked structure to obtain an electrode assembly. Putting the electrode assembly into an outer aluminum foil package, removing water at 80°C, injecting the foregoing electrolytic solution, sealing the package, and performing steps such as chemical formation, degassing, and edge trimming to obtain the lithium-ion battery.

Embodiments and comparative embodiments change parameters based on the steps of Embodiment 1, and the specific changed parameters are shown in the table blow.

In Embodiments 2 to 7, a ratio B/A of a volume of pores having a pore diameter of less than 2 µm in a positive electrode active material layer to a volume of the positive electrode active material layer is different from Embodiment 1.

In Embodiments 8 to 14, a ratio C/B of a volume of pores having a pore diameter of less than or equal to 200 nm in a positive electrode active material layer to a volume of pores having a pore diameter of less than 2 µm in the positive electrode active material layer is different from Embodiment 4.

In Embodiments 15 to 21, a type of two-dimensional inorganic materials is different from Embodiment 4.

In Embodiments 22 to 24, a type of carbon nanotubes is different from Embodiment 4.

In Embodiments 25 to 28, a length of carbon nanotubes is different from Embodiment 4.

In Embodiments 29 to 35, a mass ratio of carbon nanotubes to two-dimensional inorganic materials is different from Embodiment 4.

In Embodiments 36 to 39, Dv50 of two-dimensional inorganic materials is different from Embodiment 4.

In Embodiments 40 to 44, a mass content of a conductive agent in a positive electrode active material layer is different from Embodiment 4.

In Embodiments 45 to 49, a mass content of a positive electrode active material in a positive electrode active material layer is different from Embodiment 4.

In Embodiments 50 to 54, a compacted density of a positive electrode active material layer in a case that electricity is fully discharged is different from Embodiment 4.

In Embodiments 55 to 59, a mass content of a negative electrode active material in a negative electrode active material layer is different from Embodiment 4.

In Embodiments 60 to 64, a compacted density of a negative electrode active material layer in a case that electricity is fully discharged is different from Embodiment 4.

In Comparative Embodiments 1 and 2, polyvinylidene fluoride (PVDF) is adopted as a binder. In Comparative Embodiments 3 and 5, a ratio B/A of a volume of pores having a pore diameter of less than 2 µm in a positive electrode active material layer to a volume of the positive electrode active material layer is less than or equal to 14%, and in Comparative Embodiment 5, a ratio C/B of a volume of pores having a pore diameter of less than or equal to 200 nm in a positive electrode active material layer to a volume of pores having a pore diameter of less than 2 µm in the positive electrode active material layer is < 24%.

### Methods for measuring various parameters of this application are described below.

Measuring a pore volume:
Autopore V 9620 mercury injection apparatus, a measuring method is as follows:
taking a fixed area S of a to-be-measured sample using a cutting die, (if the to-be-measured sample is a sample that has contacted an electrolytic solution, it needs to be soaked and washed with a DMC solvent for three times, 1 min each time, firstly, and then air-dried until the weight no longer changes before being subjected to a mercury injection test), measuring a thickness D1 of a foil material using a micrometer, and calculating a volume of the foil material in the sample V1 = S × D1; and putting the to-be-measured sample into a dilatometer sample cell. Firstly, putting a dilatometer into a mercury injection apparatus low-pressure chamber, selecting a "low-pressure mode" to measure a total volume V of the sample (calculated by subtracting a low-pressure mercury admission volume from a dilatometer standard sample cell volume), and a volume of an active material layer A = V - V1; putting the dilatometer into a high-pressure chamber, selecting a "high-pressure mode" of the instrument to measure a mercury admission curve, i.e. a pore distribution curve, and integrating an area to obtain a volume. A cumulative mercury admission volume of a pressure corresponding to a pore diameter of ≤ 2 µm is a volume B, and a cumulative mercury admission volume of a pressure corresponding to a pore diameter of ≤ 200 nm is a small pore volume C.

Measuring resistance of an active material layer:
discharging a battery to a state of charge of 0%, disassembling the battery to obtain a to-be-measured electrode plate, and performing data acquisition using a HIOKI BT3562 resistance meter. Placing the to-be-measured electrode plate at a test sample stage, adjusting air pressure until a value measured by a pressure sensor is within a set interval, and checking whether a measuring pressure head causes a damage to the structure of the active material layer. Performing measuring after determining that the air pressure is normal. Using an alternating-current four-terminal measurement method to load an alternating current Iₛ to the active material layer, a sensor acquiring a voltage drop V_{IS} caused by the measured object, and according to Ohm's law, obtaining the corresponding resistance R = V_{IS}/I_{S}.

Measuring a compacted density of the active material layer:
discharging a battery to a state of charge of 0%, disassembling the battery to obtain a to-be-measured electrode plate, taking a known area s of an electrode plate using a fixing die, and weighing and measuring a thickness using a micrometer. Subtracting a weight (known area and density) and a thickness (measured by the micrometer) of a foil material. Obtaining a weight m and a thickness h of the active material layer, and a ratio of the weight to the thickness of the active material layer being a compacted density = m/hs of the active material layer in a state where electricity is fully discharged.

Measuring a capacity retention rate at a discharge rate of 4 C:
putting a lithium-ion battery into a constant temperature box at 25°C±2°C for static standing for two hours, charging the lithium-ion battery to 4.48 V at a rate of 1 C, and then charging the lithium-ion battery to 0.05 C at a constant voltage of 4.48 V. Charging the lithium-ion battery to 3.0 V at a rate of 1 C for a cycling performance test, and obtaining a reference discharge capacity; and discharging the lithium-ion battery to 3.0 V at a rate of 4 C for a cycling performance test, obtaining an actual discharge capacity, and the capacity retention rate at the discharge of 4 C = the actual discharge capacity/the reference discharge capacity * 100%.

Table 1 shows parameters and evaluation results of Embodiments 1 to 7 and Comparative Embodiments 1, 2 and 4.

**Table 1**

| Embodiment | B/A | C/B | Type of binder | Type of CNT | Length of CNT | Mass ratio of CNT to two-dimensional inorganic material | Dv50 of two-dimensional inorganic material /µm | Mass content of conductive carbon black | Mass content of positive electrode active material /% | Compacted density of positive electrode active material layer (g/cm³) | Mass content of negative electrode active material /% | Compacted density of negative electrode active material layer (g/cm³) | Resistance of positive electrode active material layer | Capacity retention rate at discharge rate of 4 C (%) |
|---|---|---|---|---|---|---|---|---|---|---|---|---|---|---|
| 1 | 14.0 | 30 | CNT+ TiO₂ | Single-walled | 5.0 | 10 | 3 | 0.5 | 98.2 | 4.1 | 97.8 | 1.6 | 0.07 | 88.5% |
| 2 | 15.0 | 30 | CNT+TiO₂ | Single-walled | 5.0 | 10 | 3 | 0.5 | 98.2 | 4.1 | 97.8 | 1.6 | 0.06 | 87.1% |
| 3 | 16.0 | 30 | CNT+TiO₂ | Single-walled | 5.0 | 10 | 3 | 0.5 | 98.2 | 4.1 | 97.8 | 1.6 | 0.06 | 86.5% |
| 4 | 17.0 | 30 | CNT+TiO₂ | Single-walled | 5.0 | 10 | 3 | 0.5 | 98.2 | 4.1 | 97.8 | 1.6 | 0.05 | 89.0% |
| 5 | 18.0 | 30 | CNT+TiO₂ | Single-walled | 5.0 | 10 | 3 | 0.5 | 98.2 | 4.1 | 97.8 | 1.6 | 0.08 | 88.5% |
| 6 | 19.0 | 30 | CNT+TiO₂ | Single-walled | 5.0 | 10 | 3 | 0.5 | 98.2 | 4.1 | 97.8 | 1.6 | 0.15 | 88.0% |
| 7 | 20.0 | 30 | CNT+TiO₂ | Single-walled | 5.0 | 10 | 3 | 0.5 | 98.2 | 4.1 | 97.8 | 1.6 | 0.19 | 87.0% |

| Comparative embodiment | | | | | | | | | | | | | | |
|---|---|---|---|---|---|---|---|---|---|---|---|---|---|---|
| 1 | 12 | 30 | PVDF | / | / | / | / | 0.9 | 98.0 | 4.1 | 97.0 | 1.6 | 2 | 43.2% |
| 3 | 13 | 30 | CNT+TiO₂ | Single-walled | 5 | 10 | 3 | 0.5 | 98.2 | 4.1 | 97.8 | 1.6 | 0.08 | 70.7% |
| 4 | 21 | 30 | CNT+TiO₂ | Single-walled | 5.0 | 10 | 3 | 0.5 | 98.2 | 4.1 | 97.8 | 1.6 | 0.09 | 69.0% |

As can be seen from Embodiments 1 to 7 versus Comparative Embodiment 1, by adopting a composite carbon material and 14% ≤ B/A ≤ 20%, resistance of a positive electrode active material layer is significantly reduced, and a capacity retention rate at a discharge rate of 4 C of an electrochemical device is significantly increased.

As can be seen from Embodiments 1 to 7 versus Comparative Embodiment 3, when 14% ≤ B/A, compared with the case where B/A is equal to 13%, the resistance of the positive electrode active material layer does not change much, but the capacity retention rate at the discharge rate of 4 C of the electrochemical device is significantly increased.

As can be seen from Embodiments 1 to 7 versus Comparative Embodiment 4, when B/A ≤ 20%, compared with the case where B/A is equal to 21%, the resistance of the positive electrode active material layer does not change much, but the capacity retention rate at the discharge rate of 4 C of the electrochemical device is significantly increased.

Table 2 shows parameters and evaluation results of Embodiments 8 to 14.

**Table 2**

| Embodiment | B/A | C/B | Type of binder | Type of CNT | Length of CNT | Mass ratio of CNT to two-dimensional inorganic material | Dv50 of two-dimensional inorganic material /µm | Mass content of conductive carbon black | Mass content of positive electrode active material /% | Compacted density of positive electrode active material layer (g/cm³) | Mass content of negative electrode active material /% | Compacted density of negative electrode active material layer (g/cm³) | Resistance of positive electrode active material layer | Capacity retention rate at discharge rate of 4 C (%) |
|---|---|---|---|---|---|---|---|---|---|---|---|---|---|---|
| 8 | 17 | 24 | CNT+TiO₂ | Single-walled | 5.0 | 10 | 3 | 0.5 | 98.2 | 4.1 | 97.8 | 1.6 | 0.1 | 88.5% |
| 9 | 17 | 26 | CNT+TiO₂ | Single-walled | 5.0 | 10 | 3 | 0.5 | 98.2 | 4.1 | 97.8 | 1.6 | 0.08 | 87.1% |
| 10 | 17 | 28 | CNT+TiO₂ | Single-walled | 5.0 | 10 | 3 | 0.5 | 98.2 | 4.1 | 97.8 | 1.6 | 0.06 | 86.5% |
| 11 | 17 | 30 | CNT+TiO₂ | Single-walled | 5.0 | 10 | 3 | 0.5 | 98.2 | 4.1 | 97.8 | 1.6 | 0.05 | 88.9% |
| 12 | 17 | 32 | CNT+TiO₂ | Single-walled | 5.0 | 10 | 3 | 0.5 | 98.2 | 4.1 | 97.8 | 1.6 | 0.08 | 86.0% |
| 13 | 17 | 34 | CNT+TiO₂ | Single-walled | 5.0 | 10 | 3 | 0.5 | 98.2 | 4.1 | 97.8 | 1.6 | 0.09 | 88.0% |
| 14 | 17 | 36 | CNT+TiO₂ | Single-walled | 5.0 | 10 | 3 | 0.5 | 98.2 | 4.1 | 97.8 | 1.6 | 0.1 | 88.2% |

| Comparative embodiment | | | | | | | | | | | | | | |
|---|---|---|---|---|---|---|---|---|---|---|---|---|---|---|
| 2 | 13 | 35 | PVDF | / | / | / | / | 0.9 | 98.0 | 4.1 | 97.0 | 1.6 | 1.5 | 50.5% |
| 5 | 17 | 23 | CNT+TiO₂ | Single-walled | 5.0 | 10 | 3 | 0.5 | 98.2 | 4.1 | 97.8 | 1.6 | 1.3 | 68% |
| 6 | 17 | 37 | CNT+TiO₂ | Single-walled | 5.0 | 10 | 3 | 0.5 | 98.2 | 4.1 | 97.8 | 1.6 | 1.4 | 72% |

As can be seen from Embodiments 8 to 14 versus Comparative Embodiment 2, when 24% ≤ C/B ≤ 36%, the resistance of the positive electrode active material layer adopting the composite carbon material is significantly reduced, and the capacity retention rate at the discharge rate of 4 C of the electrochemical device is significantly increased.

As can be seen from Embodiments 8 to 14 versus Comparative Embodiment 5, when 24% ≤ C/B, compared with the case where C/B is equal to 23%, the resistance of the positive electrode active material layer is reduced, and the capacity retention rate at the discharge rate of 4 C of the electrochemical device is significantly increased.

As can be seen from Embodiments 8 to 14 versus Comparative Embodiment 6, when C/B ≤ 36%, compared with the case where C/B is equal to 37%, the resistance of the positive electrode active material layer is reduced, and the capacity retention rate at the discharge rate of 4 C of the electrochemical device is significantly increased.

Table 3 shows parameters and evaluation results of Embodiments 15 to 21 and Comparative Embodiment 3.

**Table 3**

| Embodiment | B/A | C/B | Type of binder | Type of CNT | Length of CNT | Mass ratio of CNT to two-dimensional inorganic material | Dv50 of two-dimensional inorganic material /µm | Mass content of conductive carbon black | Mass content of positive electrode active material /% | Compacted density of positive electrode active material layer (g/cm³) | Mass content of negative electrode active material /% | Compacted density of negative electrode active material layer (g/cm³) | Resistance of positive electrode active material layer | Capacity retention rate at discharge rate of 4 C (%) |
|---|---|---|---|---|---|---|---|---|---|---|---|---|---|---|
| 15 | 17 | 30 | CNT + graphene | Single-walled | 5.0 | 10 | 3 | 0.5 | 98.2 | 4.1 | 97.8 | 1.6 | 0.05 | 88.5% |
| 16 | 17 | 30 | CNT + V₂O₅ | Single-walled | 5.0 | 10 | 3 | 0.5 | 98.2 | 4.1 | 97.8 | 1.6 | 0.09 | 87.1% |
| 17 | 17 | 30 | CNT + Nb₂O₅ | Single-walled | 5.0 | 10 | 3 | 0.5 | 98.2 | 4.1 | 97.8 | 1.6 | 0.1 | 86.5% |
| 18 | 17 | 30 | CNT+TiO₂ | Single-walled | 5.0 | 10 | 3 | 0.5 | 98.2 | 4.1 | 97.8 | 1.6 | 0.05 | 89.1% |
| 19 | 17 | 30 | CNT + Co₃V₂O₈ | Single-walled | 5.0 | 10 | 3 | 0.5 | 98.2 | 4.1 | 97.8 | 1.6 | 0.1 | 80.0% |
| 20 | 17 | 30 | CNT + MoS₂ | Single-walled | 5.0 | 10 | 3 | 0.5 | 98.2 | 4.1 | 97.8 | 1.6 | 0.09 | 88.0% |
| 21 | 17 | 30 | CNT + SnO₂ | Single-walled | 5.0 | 10 | 3 | 0.5 | 98.2 | 4.1 | 97.8 | 1.6 | 0.08 | 88.2% |

| Comparative embodiment | | | | | | | | | | | | | | |
|---|---|---|---|---|---|---|---|---|---|---|---|---|---|---|
| 7 | 17 | 30 | CNT | Single-walled | 5.0 | / | / | 0.5 | 98.2 | 4.1 | 97.8 | 1.6 | 0.08 | 71% |

As can be seen from comparing Embodiments 15 to 21, with the adoption of various different types of two-dimensional inorganic materials, the resistance of the positive electrode active material layer does not change much, and the capacity retention rate at the discharge rate of 4 C of the electrochemical device does not change much.

As can be seen from Embodiments 15 to 21 versus Comparative Embodiment 7, when no two-dimensional inorganic material is added, the resistance of the positive electrode active material layer does not change much, but the capacity retention rate at the discharge rate of 4 C of the electrochemical device is reduced.

Table 4 shows parameters and evaluation results of Embodiments 22 to 28 and Comparative Embodiment 5.

**Table 4**

| Embodiment | B/A | C/B | Type of binder | Type of CNT | Length of CNT | Mass ratio of CNT to two-dimensional inorganic material | Dv50 of two-dimensional inorganic material /µm | Mass content of conductive carbon black | Mass content of positive electrode active material /% | Compacted density of positive electrode active material layer (g/cm³) | Mass content of negative electrode active material /% | Compacted density of negative electrode active material layer (g/cm³) | Resistance of positive electrode active material layer | Capacity retention rate at discharge rate of 4 C (%) |
|---|---|---|---|---|---|---|---|---|---|---|---|---|---|---|
| 22 | 17 | 30 | CNT+TiO₂ | Few-walled | 5.0 | 10 | 3 | 0.5 | 98.2 | 4.1 | 97.8 | 1.6 | 0.15 | 88.0% |
| 23 | 17 | 30 | CNT+TiO₂ | Single-walled | 5.0 | 10 | 3 | 0.5 | 98.2 | 4.1 | 97.8 | 1.6 | 0.05 | 89.0% |
| 24 | 17 | 30 | CNT+TiO₂ | Multi-walled | 5.0 | 10 | 3 | 0.5 | 98.2 | 4.1 | 97.8 | 1.6 | 0.19 | 80.0% |
| 25 | 17 | 30 | CNT+TiO₂ | Single-walled | 2.0 | 10 | 3 | 0.5 | 98.2 | 4.1 | 97.8 | 1.6 | 0.19 | 89.0% |
| 26 | 17 | 30 | CNT+TiO₂ | Single-walled | 5.0 | 10 | 3 | 0.5 | 98.2 | 4.1 | 97.8 | 1.6 | 0.05 | 88.9% |
| 27 | 17 | 30 | CNT+TiO₂ | Single-walled | 8.0 | 10 | 3 | 0.5 | 98.2 | 4.1 | 97.8 | 1.6 | 0.1 | 88.0% |
| 28 | 17 | 30 | CNT+TiO₂ | Single-walled | 11.0 | 10 | 3 | 0.5 | 98.2 | 4.1 | 97.8 | 1.6 | 0.09 | 86.0% |

| Comparative embodiment | | | | | | | | | | | | | | |
|---|---|---|---|---|---|---|---|---|---|---|---|---|---|---|
| 8 | 17 | 30 | CNT+TiO₂ | Single-walled | 1.0 | 10 | 3 | 0.5 | 98.2 | 4.1 | 97.8 | 1.6 | 0.13 | 73% |

As can be seen from comparing Embodiments 22 to 24, compared with the adoption of multi-walled carbon nanotubes, by adopting few-walled or single-walled carbon nanotubes, the resistance of the positive electrode active material layer is reduced, and the capacity retention rate at the discharge rate of 4 C of the electrochemical device is increased.

As can be seen from comparing Embodiments 25 to 28, with the increase of the tube length of the carbon nanotubes, the resistance of the positive electrode active material layer tends to be reduced, but the capacity retention rate at the discharge rate of 4 C of the electrochemical device is reduced to a certain extent.

As can be seen from Embodiments 25 to 28 versus Comparative Embodiment 8, when the tube length of the carbon nanotubes is ≥ 2µm, the resistance of the positive electrode active material layer does not change much, but the capacity retention rate at the discharge rate of 4 C of the electrochemical device is significantly increased.

Table 5 shows parameters and evaluation results of Embodiments 29 to 35.

**Table 5**

| Embodiment | B/A | C/B | Type of binder | Type of CNT | Length of CNT | Mass ratio of CNT to two-dimensional inorganic material | Dv50 of two-dimensional inorganic material /µm | Mass content of conductive carbon black | Mass content of positive electrode active material /% | Compacted density of positive electrode active material layer (g/cm³) | Mass content of negative electrode active material /% | Compacted density of negative electrode active material layer (g/cm³) | Resistance of positive electrode active material layer | Capacity retention rate at discharge rate of 4 C (%) |
|---|---|---|---|---|---|---|---|---|---|---|---|---|---|---|
| 29 | 17 | 30 | CNT+TiO₂ | Single-walled | 5.0 | 1 | 3 | 0.5 | 98.2 | 4.1 | 97.8 | 1.6 | 0.19 | 91.5% |
| 30 | 17 | 30 | CNT+TiO₂ | Single-walled | 5.0 | 4 | 3 | 0.5 | 98.2 | 4.1 | 97.8 | 1.6 | 0.16 | 90.6% |
| 31 | 17 | 30 | CNT+TiO₂ | Single-walled | 5.0 | 7 | 3 | 0.5 | 98.2 | 4.1 | 97.8 | 1.6 | 0.13 | 89.9% |
| 32 | 17 | 30 | CNT+TiO₂ | Single-walled | 5.0 | 10 | 3 | 0.5 | 98.2 | 4.1 | 97.8 | 1.6 | 0.1 | 89.2% |
| 33 | 17 | 30 | CNT+TiO₂ | Single-walled | 5.0 | 13 | 3 | 0.5 | 98.2 | 4.1 | 97.8 | 1.6 | 0.09 | 88.8% |
| 34 | 17 | 30 | CNT+TiO₂ | Single-walled | 5.0 | 16 | 3 | 0.5 | 98.2 | 4.1 | 97.8 | 1.6 | 0.07 | 88.5% |
| 35 | 17 | 30 | CNT+TiO₂ | Single-walled | 5.0 | 19 | 3 | 0.5 | 98.2 | 4.1 | 97.8 | 1.6 | 0.05 | 87.1% |

As can be seen from comparing Embodiments 29 to 35, with the increase of a mass ratio of the carbon nanotubes to titanium dioxide as a two-dimensional inorganic material, the resistance of the positive electrode active material layer is reduced, but the capacity retention rate at the discharge rate of 4 C of the electrochemical device is reduced to a certain extent.

Table 6 shows parameters and evaluation results of Embodiments 36 to 44.

**Table 6**

| Embodiment | B/A | C/B | Type of binder | Type of CNT | Length of CNT | Mass ratio of CNT to two-dimensional inorganic material | Dv50 of two-dimensional inorganic material /µm | Mass content of conductive carbon black | Mass content of positive electrode active material /% | Compacted density of positive electrode active material layer (g/cm³) | Mass content of negative electrode active material /% | Compacted density of negative electrode active material layer (g/cm³) | Resistance of positive electrode active material layer | Capacity retention rate at discharge rate of 4 C (%) |
|---|---|---|---|---|---|---|---|---|---|---|---|---|---|---|
| 36 | 17 | 30 | CNT+TiO₂ | Single-walled | 5.0 | 10 | 1 | 0.5 | 98.2 | 4.1 | 97.8 | 1.6 | 0.15 | 86.0% |
| 37 | 17 | 30 | CNT+TiO₂ | Single-walled | 5.0 | 10 | 3 | 0.5 | 98.2 | 4.1 | 97.8 | 1.6 | 0.05 | 89.1% |
| 38 | 17 | 30 | CNT+TiO₂ | Single-walled | 5.0 | 10 | 5 | 0.5 | 98.2 | 4.1 | 97.8 | 1.6 | 0.1 | 87.5% |
| 39 | 17 | 30 | CNT+TiO₂ | Single-walled | 5.0 | 10 | 7 | 0.5 | 98.2 | 4.1 | 97.8 | 1.6 | 0.09 | 86.0% |
| 40 | 17 | 30 | CNT+TiO₂ | Single-walled | 5.0 | 10 | 3 | 0 | 98.2 | 4.1 | 97.8 | 1.6 | 0.125 | 85.5% |
| 41 | 17 | 30 | CNT+TiO₂ | Single-walled | 5.0 | 10 | 3 | 0.25 | 98.2 | 4.1 | 97.8 | 1.6 | 0.12 | 87.4% |
| 42 | 17 | 30 | CNT+TiO₂ | Single-walled | 5.0 | 10 | 3 | 0.5 | 98.2 | 4.1 | 97.8 | 1.6 | 0.05 | 88.9% |
| 43 | 17 | 30 | CNT+TiO₂ | Single-walled | 5.0 | 10 | 3 | 0.75 | 98.2 | 4.1 | 97.8 | 1.6 | 0.105 | 89.0% |
| 44 | 17 | 30 | CNT+TiO₂ | Single-walled | 5.0 | 10 | 3 | 1 | 98.2 | 4.1 | 97.8 | 1.6 | 0.1 | 90.3% |

| Comparative embodiment | | | | | | | | | | | | | | |
|---|---|---|---|---|---|---|---|---|---|---|---|---|---|---|
| 9 | 17 | 30 | CNT+TiO₂ | Single-walled | 5.0 | 10 | 0.1 | 0.5 | 98.2 | 4.1 | 97.8 | 1.6 | 1.5 | 66% |

As can be seen from comparing Embodiments 36 to 39, when Dv50 of the two-dimensional inorganic materials is less than 8 µm, with the increase of Dv50 of the two-dimensional inorganic materials, the resistance of the positive electrode active material layer is reduced first and then increased, and the capacity retention rate at the discharge rate of 4 C of the electrochemical device is increased first and then reduced.

As can be seen from Embodiments 36 to 39 versus Comparative Embodiment 9, when 1 µm < Dv50 of the two-dimensional inorganic materials, as compared to Dv50 = 0.1 µm, the resistance of the active material layer is significantly reduced, and the capacity retention rate at the discharge rate of 4 C of the electrochemical device is significantly increased.

As can be seen from comparing Embodiments 40 to 44, with the increase of the mass content of the conductive carbon black as the binder, the resistance of the positive electrode active material layer is reduced first and then increased, and the capacity retention rate at the discharge rate of 4 C of the electrochemical device is increased.

Table 7 shows parameters and evaluation results of Embodiments 45 to 55.

**Table 7**

| Embodiment | B/A | C/B | Type of binder | Type of CNT | Length of CNT | Mass ratio of CNT to two-dimensional inorganic material | Dv50 of two-dimensional inorganic material /µm | Mass content of conductive carbon black | Mass content of positive electrode active material /% | Compacted density of positive electrode active material layer (g/cm³) | Mass content of negative electrode active material /% | Compacted density of negative electrode active material layer (g/cm³) | Resistance of positive electrode active material layer | Capacity retention rate at discharge rate of 4 C (%) |
|---|---|---|---|---|---|---|---|---|---|---|---|---|---|---|
| 45 | 17 | 30 | CNT+TiO₂ | Single-walled | 5.0 | 10 | 3 | 0.5 | 97.2 | 4.1 | 97.8 | 1.6 | 0.05 | 90.5% |
| 46 | 17 | 30 | CNT+TiO₂ | Single-walled | 5.0 | 10 | 3 | 0.5 | 97.7 | 4.1 | 97.8 | 1.6 | 0.07 | 88.5% |
| 47 | 17 | 30 | CNT+TiO₂ | Single-walled | 5.0 | 10 | 3 | 0.5 | 98.2 | 4.1 | 97.8 | 1.6 | 0.11 | 89.1% |
| 48 | 17 | 30 | CNT+TiO₂ | Single-walled | 5.0 | 10 | 3 | 0.5 | 98.7 | 4.1 | 97.8 | 1.6 | 0.13 | 87.6% |
| 49 | 17 | 30 | CNT+TiO₂ | Single-walled | 5.0 | 10 | 3 | 0.5 | 99.2 | 4.1 | 97.8 | 1.6 | 0.15 | 86.0% |
| 50 | 17 | 30 | CNT+TiO₂ | Single-walled | 5.0 | 10 | 3 | 0 | 95.0 | 4.1 | 97.8 | 1.6 | 0.03 | 90.0% |
| 51 | 17 | 30 | CNT+TiO₂ | Single-walled | 5.0 | 10 | 3 | 0.5 | 98.2 | 4 | 97.8 | 1.6 | 0.06 | 90.0% |
| 52 | 17 | 30 | CNT+TiO₂ | Single-walled | 5.0 | 10 | 3 | 0.5 | 98.2 | 4.05 | 97.8 | 1.6 | 0.06 | 89.2% |
| 53 | 17 | 30 | CNT+TiO₂ | Single-walled | 5.0 | 10 | 3 | 0.5 | 98.2 | 4.1 | 97.8 | 1.6 | 0.05 | 88.1% |
| 54 | 17 | 30 | CNT+TiO₂ | Single-walled | 5.0 | 10 | 3 | 0.5 | 98.2 | 4.15 | 97.8 | 1.6 | 0.09 | 87.0% |
| 55 | 17 | 30 | CNT+TiO₂ | Single-walled | 5.0 | 10 | 3 | 0.5 | 98.2 | 4.2 | 97.8 | 1.6 | 0.13 | 80.0% |

As can be seen from comparing Embodiments 45 to 50, with the reduction of the mass content of the positive electrode active material in the positive electrode active material layer, the mass content of the composite carbon material is increased, the resistance of the positive electrode active material layer tends to be reduced, and the capacity retention rate at the discharge rate of 4 C of the electrochemical device tends to be increased.

As can be seen from comparing Embodiments 51 to 55, with the increase of the compacted density of the positive electrode active material layer, the resistance of the positive electrode active material layer tends to be increased, and the capacity retention rate at the discharge rate of 4 C of the electrochemical device tends to be reduced.

Table 8 shows parameters and evaluation results of Embodiments 56 to 65.

**Table 8**

| Embodiment | B/A | C/B | Type of binder | Type of CNT | Length of CNT | Mass ratio of CNT to two-dimensional inorganic material | Dv50 of two-dimensional inorganic material /µm | Mass content of conductive carbon black | Mass content of positive electrode active material /% | Compacted density of positive electrode active material layer (g/cm³) | Mass content of negative electrode active material /% | Compacted density of negative electrode active material layer (g/cm³) | Resistance of positive electrode active material layer | Capacity retention rate at discharge rate of 4 C (%) |
|---|---|---|---|---|---|---|---|---|---|---|---|---|---|---|
| 56 | 39 | 9 | CNT+TiO₂ | Single-walled | 5.0 | 10 | 3 | 0.5 | 97.2 | 4.1 | 97.4 | 1.6 | 0.06 | 88.0% |
| 57 | 39 | 9 | CNT+TiO₂ | Single-walled | 5.0 | 10 | 3 | 0.5 | 97.7 | 4.1 | 97.6 | 1.6 | 0.05 | 88.5% |
| 58 | 39 | 9 | CNT+TiO₂ | Single-walled | 5.0 | 10 | 3 | 0.5 | 98.2 | 4.1 | 97.8 | 1.6 | 0.05 | 89.0% |
| 59 | 39 | 9 | CNT+TiO₂ | Single-walled | 5.0 | 10 | 3 | 0.5 | 98.7 | 4.1 | 98.0 | 1.6 | 0.06 | 87.6% |
| 60 | 39 | 9 | CNT+TiO₂ | Single-walled | 5.0 | 10 | 3 | 0.5 | 99.2 | 4.1 | 98.2 | 1.6 | 0.06 | 86.0% |
| 61 | 39 | 9 | CNT+TiO₂ | Single-walled | 5.0 | 10 | 3 | 0.5 | 98.2 | 4.1 | 97.8 | 1.5 | 0.06 | 90.0% |
| 62 | 39 | 9 | CNT+TiO₂ | Single-walled | 5.0 | 10 | 3 | 0.5 | 98.2 | 4.1 | 97.8 | 1.55 | 0.05 | 89.2% |
| 63 | 39 | 9 | CNT+TiO₂ | Single-walled | 5.0 | 10 | 3 | 0.5 | 98.2 | 4.1 | 97.8 | 1.6 | 0.05 | 89.0% |
| 64 | 39 | 9 | CNT+TiO₂ | Single-walled | 5.0 | 10 | 3 | 0.5 | 98.2 | 4.1 | 97.8 | 1.65 | 0.06 | 87.0% |
| 65 | 39 | 9 | CNT+TiO₂ | Single-walled | 5.0 | 10 | 3 | 0.5 | 98.2 | 4.1 | 97.8 | 1.7 | 0.05 | 80.8% |

As can be seen from comparing Embodiments 56 to 60, with the increase of the mass content of the negative electrode active material in the positive electrode active material layer, the resistance of the negative electrode layer does not change much, and the capacity retention rate at the discharge rate of 4 C of the electrochemical device is increased first and then reduced.

As can be seen from comparing Embodiments 61 to 65, with the increase of the compacted density of the negative electrode active material layer, the resistance of the positive electrode active material layer does not change much, and the capacity retention rate at the discharge rate of 4 C of the electrochemical device tends to be reduced.

What is described above is merely preferred embodiments of this application and an illustration of technical principles utilized. A person skilled in the art understands that the scope of the disclosure involved in this application is not limited to the technical solutions formed by particular combinations of the foregoing technical features, but also covers other technical solutions formed by any combinations of the foregoing technical features or equivalent features thereof, for example, the technical solutions formed by mutual replacement of the foregoing features and the technical features having similar functions disclosed in this application.

## Claims

1. An electrochemical device, comprising a positive electrode, the positive electrode comprising:
a positive electrode active material layer, the positive electrode active material layer comprising a positive electrode active material and a composite carbon material;
**characterized in that**, 14% ≤ B/A ≤ 20%, A is a volume of the positive electrode active material layer, and B is a volume of pores having a pore diameter of less than 2 µm in the positive electrode active material layer.

2. The electrochemical device according to claim 1, **characterized in that**, 24% ≤ C/B ≤ 36%; C is a volume of pores having a pore diameter of less than or equal to 200 nm in the positive electrode active material layer.

3. The electrochemical device according to claim 1, **characterized in that**, the composite carbon material comprises carbon nanotubes and two-dimensional inorganic materials.

4. The electrochemical device according to claim 3, **characterized in that**, a tube length of the carbon nanotubes is greater than or equal to 2 µm.

5. The electrochemical device according to claim 3, **characterized in that**, the two-dimensional inorganic materials comprise at least one of graphene, V₂O₅, Nb₂O₅, TiO₂, Co₃V₂O₈, MoS₂ or SnO₂.

6. The electrochemical device according to claim 3, **characterized in that**, a mass ratio of the carbon nanotubes to the two-dimensional inorganic materials in the composite carbon material is greater than or equal to 1 and less than or equal to 20.

7. The electrochemical device according to claim 3, **characterized in that**, a Dv50 of the two-dimensional inorganic materials is less than 8 µm.

8. The electrochemical device according to claim 1, **characterized in that**, the positive electrode satisfies at least one of the following conditions:
a mass content of the positive electrode active material in the positive electrode active material layer is greater than or equal to 97%;
a compacted density of the positive electrode active material layer is less than or equal to 4.2 g/cm³; or
a resistance of the positive electrode active material layer is less than 0.2 Q.

9. The electrochemical device according to claim 1, **characterized in that**, the electrochemical device adopts a discharge rate of 4C for measuring, and has a capacity retention rate ≥ 80%.

10. The electrochemical device according to claim 1, **characterized in that**, the electrochemical device further comprises a negative electrode, the negative electrode comprises a negative electrode active material layer; and
the negative electrode satisfies at least one of following conditions:
a mass content of negative electrode active materials in the negative electrode active material layer is greater than or equal to 97.4%,
a compacted density of the negative electrode active material layer is less than or equal to 1.7 g/cm³, or
the negative electrode active materials comprises at least one of graphite, hard carbon, silicon, silicon monoxide or organic silicon.

11. An electronic device, comprising the electrochemical device according to any one of claims 1 to 10.
